# EUROPEAN PATENT SPECIFICATION

(11) **EP 3 770 199 B1**
(45) Date of publication and mention of the grant of the patent: **20.11.2024**
(21) Application number: 19188530.0
(22) Date of filing: 26.07.2019
(51) Int. Cl.: C08G 18/48, C08G 18/76, C08G 65/16, C08G 65/26, C09J 175/08

(54) **POLYETHERPOLYOL WITH LOW CONTENT OF CYCLIC OLIGOMERS**
POLYETHERPOLYOL MIT NIEDRIGEM GEHALT AN CYCLISCHEN OLIGOMEREN
POLYÉTHERPOLYOL À FAIBLE CONTENU D'OLIGOMÈRES CYCLIQUES

(43) Date of publication of application: 27.01.2021
(73) Proprietor: Henkel AG & Co. KGaA, 40589 Düsseldorf (DE)
(72) Inventor: Brandt, Adrian, 45219 Essen (DE); Beck, Horst, 41470 Neuss (DE); Kux, Alexander, 40789 Monheim (DE); de Vries, Johannes Gerardus, 18055 Rostock (DE); Tin, Sergey, 18059 Rostock (DE); Stadler, Bernhard M., 18057 Rostock (DE)

(56) References cited:
- WO-A1-2018/029232
- US-A- 4 658 065
- US-A1- 2012 259 090

## Description

The present invention refers to polyetherpolyols which are characterized by a low content of cyclic by-products as well as to a method for producing the polyetherpolyol and an adhesive composition comprising the same.

Polyetherpolyols are well-known compounds suitable for a variety of applications. One common application is the employment of polyetherpolyols in the production of adhesive systems, in particular polyurethane adhesives wherein the polyetherpolyol is reacted with an isocyanate component to obtain the desired polyurethane. In particular with regard to the application of polyetherpolyols in adhesive systems, a high content of linear OH-terminated polymer chains is desirable. However, in most cases, the polyetherpolyols also contain a certain amount of cyclic oligomeric by-products which lead to a decrease in the mechanical performance of the adhesive or thermoplastic polyurethanes. It is therefore desirable to keep the content of cyclic oligomers as low as possible.

A number of attempts have been made to obtain suitable polyetherpolyols, one being the polymerization of cyclic ethers. While three- and four-membered cyclic ethers readily undergo polymerization reaction due to high ring-strain, polymerization of the thermodynamically stable five- and six-membered ring systems remains challenging.

A. Ishigaki describes the copolymerization of 2-substituted tetrahydrofurans with some cyclic ethers using BF₃·(C₂H₅)₂O as initiator in Die Makromolekulare Chemie 1964, 79, p. 170. 2-Methyltetrahydrofuran (MTHF), which was known to not homopolymerize, was found to copolymerize with such monomers as epichlorohydrin and 3,3-bis(chloromethyl) oxacyclobutane (BCMO). The report in particular highlights the low reactivity of the 2-substituted tetrahydrofurans which were found to only undergo polymerization with halogenated co-monomers.

US 4658065 A discloses a process for producing a polyether polyol with a content of 0.5 to 99.5% by weight of oxytetramethylene groups derived from tetrahydrofuran by copolymerizing tetrahydrofuran with a polyhydric alcohol having two or more hydroxyl groups per one molecule with the use of a heteropoly-acid and/or its salt as a catalyst, which comprises allowing 0.1 to 15 molecules of water per one heteropoly-anion to exist in the catalyst phase.

US 2012259090 A1 discloses a process for manufacturing copolyether glycol having a mean molecular weight of from about 650 to about 5000 dalton by polymerization of tetrahydrofuran and at least one alkylene oxide in the presence of an acid catalyst and at least one compound containing reactive hydrogen atoms.

WO 2018029232 A1 discloses a method for adding a compound (A) to an H-functional starting compound (BH) in the presence of a catalyst, wherein the at least one compound (A) is selected from at least one group consisting of alkylene oxide (A-1), lactone (A-2), lactide (A-3), cyclic acetal (A-4), lactam (A-5), cyclic anhydride (A-6) and oxygen-containing heterocyclic compound (A-7) different from (A-1), (A-2), (A-3), (A-4) and (A-6), wherein the catalyst comprises an organic, n-protic Brønsted acid (C).

However, it was found that the polyetherpolyols produced according to the known methods still contain high amounts of cyclic by-products which impair the performance of any products obtained from the polyetherpolyols.

In light of the above, it is the object of the present invention to provide a polyetherpolyol which allows for the production products showing good mechanical performances.

It was surprisingly found that polyetherpolyols having a reduced number of cyclic by-products lead to mechanically stable products, such as adhesives and coating systems and the amount of undesired cyclic by-products can be significantly reduced.

A first object of the present invention is therefore a polyetherpolyol obtained by co-polymerization of a compound A containing at least one epoxide moiety and a compound B capable of undergoing a ring-opening reaction wherein compound A and compound B are different from each other and wherein the co-polymerization is carried out in the presence of a Brønsted acid with a weakly coordinating and non-nucleophilic anion, wherein compound B is selected from five-membered heterocyclic rings and six-membered heterocyclic rings and wherein compound A has a molecular weight of 40 to 200 g/mol, characterized in that the difference between the number average molecular weight Mn of the polyetherpolyol as determined by GPC and the number average molecular weight Mn of the polyetherpolyol as determined by end group titration is less than 50%, based in the number average molecular weight Mn of the polyetherpolyol as determined by GPC.

It was surprisingly found that the Inventive polyetherpolyol could be obtained in good yields and with chain lengths suitable for adhesive applications.

The presence of cyclic by-products, in particular cyclic oligomers is preferable to be avoided due to the negative impact on the mechanical performance of the final product like an adhesive, sealing or a coating. It was surprisingly found that formation of cyclic by-products was hardly observed during the preparation of the inventive polyetherpolyol. As a measure for the presence of undesired cyclic by-products, the difference in the number average molecular weight Mₙ of the inventive polyetherpolyol determined by gel permeation chromatography (GPC) and the number average molecular weight Mₙ of the inventive polyetherpolyol determined by end group titration was used. A significant difference between the number average molecular weight determined by GPC and the number average molecular weight determined by end group titration was interpreted being due to the presence of cyclic by-products which would not be registered by determination by end group titration, resulting in the mentioned difference in molecular weight. Therefore, an embodiment of the present invention is preferred wherein the difference between the number average molecular weight Mₙ of the inventive polyetherpolyol as determined by GPC and the number average molecular weight Mₙ of the inventive polyetherpolyol as determined by end group titration is less than 40%, preferably less than 20%, based on the number average molecular weight Mₙ of the inventive polyetherpolyol as determined by GPC.

In a preferred embodiment, compound A is a low molecular weight epoxy compound, in particular having a molecular weight of 50 to 160 g/mol. In an especially preferred embodiment, compound A is selected from the group consisting of ethylene oxide (EO), propylene oxide (PO) and the compounds shown in figure 1.

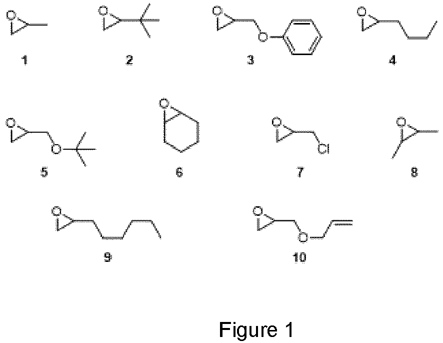

In an especially preferred embodiment, compound A is propylene oxide (PO).

It was surprisingly found that ring systems which normally do not undergo co-polymerization could be employed as co-monomers in the inventive polyetherpolyol.

In a preferred embodiment, compound B is selected from the group consisting of five-membered and six-membered cyclic ethers which are optionally substituted. In a further preferred embodiment, compound B is selected from the group consisting of substituted five-membered cyclic ethers and substituted six-membered cyclic ether, the one or more substituents being independently selected from the group consisting methyl, ethyl, propyl, iso-propyl, butyl, iso-butyl and tert-butyl. In an especially preferred embodiment, compound B is 2-methyl tetrahydrofuran.

The Brønsted acid with a weakly coordinating and non-nucleophilic anion employed in the present invention is preferably selected from the group consisting of H₃PW₁₂O₄₀* × H₂O with 10 ≤ x ≤ 44, preferably 15 ≤ x ≤ 30, H₃pMO₁₂O₄₀, HBF₄, CF₃COOH, CF₃SO₃H, triflimidic acid and HSbF₆.

In light of the awareness of limited resources, sustainability and the replacement of commonly used petro-based compounds with compounds obtained from renewable sources, so called bio-based compounds, have become the focus of attention. The inventive polyetherpolyol has the advantage that the monomers employed in the copolymerization may be obtained from renewable sources such as plants thereby contributing to the ever-growing sector of resource-friendly chemical compounds. Therefore, in a preferred embodiment of the invention, compound A and/or compound B are obtained from renewable sources.

It was further surprisingly found that the polymer backbone of the polyetherpolyol can be individually designed by selecting the appropriate ratio of monomers. In this way it is possible to obtain a polyetherpolyol wherein the monomeric ring-opened units in the chain have perfect alternation, wherein the alkene terminated chains are only formed in quantities below the quantification limit. In a preferred embodiment, the initial monomer ratio by weight of compound A to compound B is 1:20 to 1:1.3, preferably 1:5 to 1:1.5.

The molecular weight of the inventive polyetherpolyol may be adjusted according to the specific application. However, especially in view of applications in adhesives, it is advantageous if the molecular weightdoes not exceed a certain limit. In a preferred embodiment of the present invention, the polyetherpolyol therefore has an average number molecular weight Mₙ of 500 to 5000 g/mol, preferably 700 to 3000 g/mol, determined by GPC.

It is also desirable to have a narrow molecular weight distribution. In a preferred embodiment, the inventive polyetherpolyol therefore has a polydispersity index (PDI) of 1.1 to 5.0, preferably 1.1 to 2.5, determined according to GPC. Within the present invention, PDI refers to the ratio of the average weight molecular weight and the average number molecular weight of the polyetherpolyol (Mw/Mn).

In a preferred embodiment, the inventive polyetherpolyol has a hydroxyl value (OH value) of 10 to 200 mg KOH/g, preferably 50 to 150 mg KOH/g, determined according to DIN 53240.

A further object of the present invention is a method for the production of a polyetherpolyol according to the invention. The method comprises the polymerization of compound A and compound B by providing a reaction vessel charged with compound B and subsequently adding compound A over a period of time t_{A} in the presence of a Brønsted acid with a weakly coordinating and non-nucleophilic anion, wherein compound B is selected from five-membered heterocyclic rings and six-membered heterocyclic rings and wherein compound A has a molecular weight of 40 to 200 g/mol, characterized in that the difference between the number average molecular weight Mₙ of the polyetherpolyol as determined by GPC and the number average molecular weight Mₙ of the polyetherpolyol as determined by end group titration is less than 50%. It was surprisingly found that the difference between the molecular weight determined by GPC and the molecular weight determined by end group titration can be further reduced if compound A is added dropwise over a certain period of time. The period of time t_{A} varies depending on the amount of compound A to be added and may range from minutes to several hours.

It was surprisingly found that the presence of compounds with functional groups that exhibit nucelophilic behavior, such as water, alcohols, amines, thiols, etc., during polymerization also suppressed the formation of cyclic oligomers. These compounds can be referred to as initiators. Therefore, polymerization is preferably carried out in the presence of one or more initiator. However, it was observed that the molecular weight of the polyetherpolyol was reduced if too much initiator was present. In a preferred embodiment, the amount of initiator is therefore 1 to 15 mol-%, preferably 2 to 10 mol-%, with respect to compound A.

The Brønsted acid with a weakly coordinating and non-nucleophilic anion is preferably employed in the reaction in an amount of 0.005 to 10 mol-%, preferably 0.01 to 1 mol-%. The Brønsted acid with a weakly coordinating and non-nucleophilic anion is preferably selected from the group consisting of H₃PW₁₂O₄₀* × H₂O with 10 ≤ x ≤ 44, preferably 15 ≤ x ≤ 30, H₃pMO₁₂O₄₀, HBF₄, CF₃COOH, CF₃SO₃H, triflimidic acid and HSbF₆.

The inventive polyetherpolyol can be further functionalized with a number of different reaction partners resulting in acrylate, isocyanate, epoxide, vinyl ether, thiol, amine termination and the like. It is thus especially suitable for applications in the fields of coatings, adhesives, sealings and elastomers (CASE), in particular adhesives. A further object of the present invention is therefore an adhesive composition comprising the inventive polyetherpolyol. In a preferred embodiment, the adhesive composition is a polyurethane adhesive composition or a silane-based adhesive.

Also an object of the present invention is the use of the inventive polyetherpolyol for the production of adhesives, preferably polyurethane adhesives and silane-based systems.

### Examples:

### Example A (Reference)

A reaction vessel was charged with 2-methyl THF and BF₃•2H₂O was added. Propylene oxide was introduced dropwise into the reaction mixture and the resulting contents were left to stir. Then, an aqueous solution of sodium hydroxide was added. The resulting aqueous phase was extracted with an organic solvent. The obtained organic phase was washed and dried. After removal of the organic solvent, the polyetherpolyol was obtained.

### Example B (according to the invention)

A reaction vessel was charged with 2-methyl THF and phosphortungstic acid H₃PW₁₂O₄₀* 24 H₂O) was added, followed by the addition of an alcohol. Propylene oxide was introduced dropwise into the reaction mixture and the resulting contents were left to stir. Then, an aqueous solution of sodium carbonate was added. Any excess of 2-methyl THF was evaporated under reduced pressure. The obtained polyetherpolyol was dissolved in an organic solvent and filtered through a pad of silica. After removal of the volatiles in the filtrate, the inventive polyether polyol was obtained.

The molecular weight of the obtained polyetherpolyols was determined via GPC-APC and by way of end-group titration. The results are summarized in Table 1.

**Table 1**

| Polyether polyol | Molar MTHF/PO ratio | OHZ in mg KOH/g | PDI | Mn (GPC) in g/mol | Mn (OHZ) in g/mol | Deviation Mn (OHZ) relative to Mn (GPC) in % |
|---|---|---|---|---|---|---|
| #1 obtained by Example A | 52:48 | 35 | 2.3 | 1134 | 3206 | 183 |
| #2 obtained by Example B | 37:63 | 64 | 2.1 | 1311 | 1753 | 34 |
| #3 obtained by Example B | 35:65 | 94 | 2.0 | 1012 | 1194 | 18 |
| #4 obtained by Example B | 37:63 | 70 | 1.7 | 1464 | 1603 | 10 |

GPC analysis of the samples was carried out on an Acquity Advanced Polymer Chromatography System available from Waters Corporation (USA) with an RI and PDA detector. THF with a flow rate of 0.5 ml/minute was used as the eluent and the molecular weights were determined against a polystyrene standard (PSS) of 266 to 1210000 Dalton. Evaluation of the average molecular weight values was carried out using a calibration curve of the 5^{th} order ("Streifenmethode").

End group titration was carried out according to standard procedure as described in DIN 53240 by acetylation of the free hydroxyl groups of the sample with acetic anhydride in pyridine solvent. After completion of the reaction, water was added, and the remaining unreacted acetic anhydride converted to acetic acid and measured by titration with potassium hydroxide.

The inventive polyetherpolyol was reacted with a diisocyanate (4,4'-methylene diphenyl diisocyanate) at a ratio of 2.2 (NCO/OH) to obtain a polyurethane adhesive. Films were casted (13 cm x 5 cm, thickness of 2 mm) and stored for 7 days at 23 °C and 50% relative humidity. The same procedure was applied using PPG 2000 and pTHF as comparable polyetherpolyols, respectively. The obtained films were then characterized by stress-strain tests. The results are summarized in Table 2. It was surprisingly found that the adhesive based on the inventive polyetherpolyol reached a higher tensile strength than the commonly employed PPG (2.18 n/mm² compared to 1.54 n/mm²) at 50% elongation.

**Table 2**

| Elongation [%] | pTHF1000-reference, tensile strength [N mm⁻²] | Inventive polyetherpolyol tensile strength [N mm⁻²] | PPG200-reference, tensile strength [N mm⁻²] |
|---|---|---|---|
| 50 | 5.00 | 2.18 | 1.54 |
| 100 | 5.80 | 2.49 | 1.87 |
| 200 | 6.00 | 2.81 | 2.30 |
| 300 | 8.20 | 3.00 | 2.75 |

The stress-strain test was conducted using a Z010 test system from Zwick-Roell equipped with a 500 N probe head. Speed of sample elongation was 50 mm/min according to DIN 535049.

## Claims

1. Polyetherpolyol obtained by co-polymerization of a compound A containing at least one epoxide moiety and a compound B capable of undergoing a ring opening reaction wherein compound A and compound B are different from each other and wherein the co-polymerization is carried out in the presence of a Bronsted acid with a weakly coordinating and non-nucleophilic anion, wherein compound B is selected from five-membered heterocyclic rings and six-membered heterocyclic rings and in that compound A has a molecular weight of 40 to 200 g/mol, **characterized in that** the difference between the number average molecular weight Mₙ of the polyetherpolyol as determined by GPC and the number average molecular weight Mₙ of the polyetherpolyol as determined by end group titration is less than 50%, based in the number average molecular weight Mn of the polyetherpolyol as determined by GPC.

2. Polyetherpolyol according to claim 1 **characterized in that** compound B is selected from five-membered cyclic ethers and six-membered cyclic ethers, optionally substituted.

3. Polyetherpolyol according to any of the forgoing claims **characterized in that** compound A has a molecular weight of 50 to 160 g/mol.

4. Polyetherpolyol according to any of the forgoing claims **characterized in that** compound A and/or compound B is obtained from renewable sources.

5. Polyetherpolyol according to any of the forgoing claims **characterized in that** wherein the difference between the number average molecular weight Mₙ of the inventive polyetherpolyol as determined by GPC and the number average molecular weight Mₙ of the polyetherpolyol as determined by end group titration is less than 40%, in particular less than 20%, based on the number average molecular weight Mₙ of the inventive polyetherpolyol as determined by GPC.

6. Polyetherpolyol according to any of the forgoing claims **characterized in that** the Bronsted acid with a weakly coordinating and non-nucleophilic anion is selected from the group consisting of H₃PW₁₂O₄₀* × H₂O with 10 ≤ x ≤ 44, preferably 15 ≤ x ≤ 30, H₃pMO₁₂O₄₀, HBF₄, CF₃COOH, CF₃SO₃H, triflimidic acid and HSbF₆.

7. Polyetherpolyol according to any of the forgoing claims **characterized in that** the polyetherpolyol has an average number molecular weight Mₙ of 500 to 5000 g/mol, preferably 700 to 3000 g/mol, determined by GPC.

8. Polyetherpolyol according to any of the forgoing claims **characterized in that** the polyetherpolyol has a hydroxyl value (OH-value) of 10 to 200 mg KOH/g, preferably 50 to 150 mg KOH/g, determined according to DIN 53240.

9. Method for the production of a polyetherpolyol according to any of claims 1 to 8, the method comprising the polymerization of compound A and compound B by providing a reaction vessel charged with compound B and subsequently adding of compound A over a period of time t_{A} in the presence of a Bronsted acid with a weakly coordinating and non-nucleophilic anion,. compound B is selected from five-membered heterocyclic rings and six-membered heterocyclic rings and in that compound A has a molecular weight of 40 to 200 g/mol, **characterized in that** the difference between the number average molecular weight Mₙ of the polyetherpolyol as determined by GPC and the number average molecular weight Mₙ of the polyetherpolyol as determined by end group titration is less than 50%, .

10. Method according to claim 9, **characterized in that** the polymerization is carried out in the presence of a nucleophilic initiator.

11. Method according to claim 10, **characterized in that** the amount of initiator is 1 to 15 mol-%, preferably 2 to 10 mol-%, with respect to compound A.

12. Adhesive composition comprising a polyetherpolyol according to any of claims 1 to 8.

13. Use of a polyetherpolyol according to any of claims 1 to 8 for the production of adhesives, preferably polyurethane adhesives and silane-based adhesives.

## Patentansprüche

1. Polyetherpolyol, das durch Copolymerisation einer Verbindung A, die mindestens eine Epoxideinheit enthält, und einer Verbindung B, die fähig ist, einer Ringöffnungsreaktion ausgesetzt zu sein, erhalten wird, wobei die Verbindung A und die Verbindung B voneinander verschieden sind und wobei die Copolymerisation in Gegenwart einer Brømsted-Säure mit einem schwach koordinierenden und nicht nukleophilen Anion durchgeführt wird, wobei die Verbindung B aus fünfgliedrigen heterocyclischen Ringen und sechsgliedrigen heterocyclischen Ringen ausgewählt ist und wobei die Verbindung A ein Molekulargewicht von 40 bis 200 g/mol aufweist, **dadurch gekennzeichnet, dass** die Differenz zwischen dem zahlenmittleren Molekulargewicht Mₙ des Polyetherpolyols, wie durch GPC bestimmt, und dem zahlenmittleren Molekulargewicht Mₙ des Polyetherpolyols, wie durch Endgruppentitration bestimmt, weniger als 50 %, bezogen auf das zahlenmittlere Molekulargewicht Mn des Polyetherpolyols, wie durch GPC bestimmt, beträgt.

2. Polyetherpolyol nach Anspruch 1, **dadurch gekennzeichnet, dass** die Verbindung B aus fünfgliedrigen cyclischen Ethern und sechsgliedrigen cyclischen Ethern, gegebenenfalls substituierten, ausgewählt ist.

3. Polyetherpolyol nach einem der vorstehenden Ansprüche,
**dadurch gekennzeichnet, dass** die Verbindung A ein Molekulargewicht von 50 bis 160 g/mol aufweist.

4. Polyetherpolyol nach einem der vorstehenden Ansprüche,
**dadurch gekennzeichnet, dass** die Verbindung A und/oder die Verbindung B aus erneuerbaren Quellen erhalten wird.

5. Polyetherpolyol nach einem der vorstehenden Ansprüche,
**dadurch gekennzeichnet, dass,** wobei die Differenz zwischen dem zahlenmittleren Molekulargewicht Mₙ des erfindungsgemäßen Polyetherpolyols, wie durch GPC bestimmt, und des zahlenmittleren Molekulargewicht Mₙ des Polyetherpolyols, wie durch Endgruppentitration bestimmt, weniger als 40 %, insbesondere weniger als 20 %, bezogen auf das zahlenmittlere Molekulargewicht Mₙ des erfindungsgemäßen Polyetherpolyols, wie durch GPC bestimmt, beträgt.

6. Polyetherpolyol nach einem der vorstehenden Ansprüche,
**dadurch gekennzeichnet, dass** die Brømsted-Säure mit einem schwach koordinierenden und nicht nukleophilen Anion aus der Gruppe ausgewählt ist, bestehend aus H₃PW₁₂O₄₀* × H₂O mit 10 ≤ x ≤ 44, vorzugsweise 15 ≤ x ≤ 30, H₃PMO₁₂O₄₀, HBF₄, CF₃COOH, CF₃SO₃H, Triflimidsäure und HSbF₆.

7. Polyetherpolyol nach einem der vorstehenden Ansprüche,
**dadurch gekennzeichnet, dass** das Polyetherpolyol ein zahlenmittleres Molekulargewicht Mₙ von 500 bis 5000 g/mol, vorzugsweise 700 bis 3000 g/mol, bestimmt durch GPC, aufweist.

8. Polyetherpolyol nach einem der vorstehenden Ansprüche,
**dadurch gekennzeichnet, dass** das Polyetherpolyol einen Hydroxylwert (OH-Wert) von 10 bis 200 mg KOH/g, vorzugsweise 50 bis 150 mg KOH/g, bestimmt gemäß DIN 53240, aufweist.

9. Verfahren für die Herstellung eines Polyetherpolyols nach einem der Ansprüche 1 bis 8, wobei das Verfahren die Polymerisation der Verbindung A und der Verbindung B durch Bereitstellen eines mit der Verbindung B befüllten Reaktionsgefäßes und anschließendes Hinzufügen der Verbindung A über einen Zeitraum t_{A} in Gegenwart einer Bremsted-Säure mit einem schwach koordinierenden und nicht nukleophilen Anion umfasst, wobei die Verbindung B aus fünfgliedrigen heterocyclischen Ringen und sechsgliedrigen heterocyclischen Ringen ausgewählt ist und wobei die Verbindung A ein Molekulargewicht von 40 bis 200 g/mol aufweist, **dadurch gekennzeichnet, dass** die Differenz zwischen dem zahlenmittleren Molekulargewicht Mₙ des Polyetherpolyols, wie durch GPC bestimmt, und dem zahlenmittleren Molekulargewicht Mₙ des Polyetherpolyols, wie durch Endgruppentitration bestimmt, weniger als 50 % beträgt.

10. Verfahren nach Anspruch 9, **dadurch gekennzeichnet, dass** die Polymerisation in Gegenwart eines nukleophilen Initiators durchgeführt wird.

11. Verfahren nach Anspruch 10, **dadurch gekennzeichnet, dass** die Initiatormenge 1 bis 15 Mol-%, vorzugsweise 2 bis 10 Mol-%, in Bezug auf die Verbindung A, beträgt.

12. Klebstoffzusammensetzung, umfassend ein Polyetherpolyol nach einem der Ansprüche 1 bis 8.

13. Verwendung eines Polyetherpolyols nach einem der Ansprüche 1 bis 8 für die Herstellung von Klebstoffen, vorzugsweise Polyurethanklebstoffen und Klebstoffen auf Silanbasis.

## Revendications

1. Polyétherpolyol obtenu par copolymérisation d'un composé A contenant au moins un fragment époxyde et d'un composé B capable de subir une réaction d'ouverture de cycle dans lequel le composé A et le composé B sont différents l'un de l'autre et dans lequel la copolymérisation est effectuée en présence d'un acide de Bronsted avec un anion à faible coordination et non nucléophile, dans lequel le composé B est choisi parmi des noyaux hétérocycliques à cinq chaînons et des noyaux hétérocycliques à six chaînons et en ce que le composé A a une masse moléculaire de 40 à 200 g/mol, **caractérisé en ce que** la différence entre la masse moléculaire moyenne en nombre Mₙ du polyétherpolyol telle que déterminée par CPG et la masse moléculaire moyenne en nombre Mₙ du polyétherpolyol telle que déterminée par titrage de groupes terminaux est inférieure à 50 %, en fonction de la masse moléculaire moyenne en nombre Mn du polyétherpolyol telle que déterminée par CPG.

2. Polyétherpolyol selon la revendication 1 **caractérisé en ce que** le composé B est choisi parmi des éthers cycliques à cinq chaînons et des éthers cycliques à six chaînons, facultativement substitués.

3. Polyétherpolyol selon l'une quelconque des revendications précédentes **caractérisé en ce que** le composé A a une masse moléculaire de 50 à 160 g/mol.

4. Polyétherpolyol selon l'une quelconque des revendications précédentes **caractérisé en ce que** le composé A et/ou le composé B sont obtenus à partir de sources renouvelables.

5. Polyétherpolyol selon l'une quelconque des revendications précédentes **caractérisé en ce que** dans lequel la différence entre la masse moléculaire moyenne en nombre Mₙ du polyétherpolyol de l'invention telle que déterminée par CPG et la masse moléculaire moyenne en nombre Mₙ du polyétherpolyol telle que déterminée par titrage de groupes terminaux est inférieure à 40 %, en particulier inférieure à 20 %, en fonction de la masse moléculaire moyenne en nombre Mₙ du polyétherpolyol de l'invention telle que déterminée par CPG.

6. Polyétherpolyol selon l'une quelconque des revendications précédentes **caractérisé en ce que** l'acide de Bronsted avec un anion à faible coordination et non nucléophile est choisi dans le groupe constitué par H₃PW₁₂O₄₀* × H₂O avec 10 ≤ x ≤ 44, de préférence 15 ≤ x ≤ 30, H₃PMo₁₂O₄₀, HBF₄, CF₃COOH, CF₃SO₃H, acide triflimidique et HSbF₆.

7. Polyétherpolyol selon l'une quelconque des revendications précédentes **caractérisé en ce que** le polyétherpolyol a une masse moléculaire moyenne en nombre Mₙ de 500 à 5000 g/mol, de préférence 700 à 3000 g/mol, déterminée par CPG.

8. Polyétherpolyol selon l'une quelconque des revendications précédentes **caractérisé en ce que** le polyétherpolyol a un indice d'hydroxyle (indice d'OH) de 10 à 200 mg de KOH/g, de préférence 50 à 150 mg de KOH/g, déterminé selon DIN 53240.

9. Procédé destiné à la production d'un polyétherpolyol selon l'une quelconque des revendications 1 à 8, le procédé comprenant la polymérisation d'un composé A et d'un composé B en fournissant un récipient à réaction chargé avec le composé B et en ajoutant ultérieurement le composé A sur un laps de temps t_{A} en présence d'un acide de Bronsted avec un anion à faible coordination et non nucléophile, le composé B est choisi parmi des noyaux hétérocycliques à cinq chaînons et des noyaux hétérocycliques à six chaînons et en ce que la composé A a une masse moléculaire de 40 à 200 g/mol, **caractérisé en ce que** la différence entre la masse moléculaire moyenne en nombre Mₙ du polyétherpolyol telle que déterminée par CPG et la masse moléculaire moyenne en nombre Mₙ du polyétherpolyol telle que déterminée par titrage de groupes terminaux est inférieure à 50 %.

10. Procédé selon la revendication 9, **caractérisé en ce que** la polymérisation est effectuée en présence d'un initiateur nucléophile.

11. Procédé selon la revendication 10, **caractérisé en ce que** la quantité d'initiateur va de 1 à 15 % molaires, de préférence 2 à 10 % molaires, par rapport au composé A.

12. Composition adhésive comprenant un polyétherpolyol selon l'une quelconque des revendications 1 à 8.

13. Utilisation d'un polyétherpolyol selon l'une quelconque des revendications 1 à 8 pour la production d'adhésifs, de préférence des adhésifs de polyuréthane et des adhésifs à base de silane.
